# DEMANDE DE BREVET EUROPEEN

(11) **EP 3 337 016 A1**
(43) Date de publication de la demande: **20.06.2018**
(21) Numéro de dépôt: 17207841.2
(22) Date de dépôt: 15.12.2017
(51) Int. Cl.: H02K 5/22, F04D 13/06, H02K 11/33, F04D 29/42

(54) **POMPE DE CIRCULATION A CAVITE DE LIMITATION DE CONDENSATION**

(30) Priorité: 15.12.2016 FR 1662564
(71) Demandeur: Wilo Intec, 18700 Aubigny sur Nere (FR)
(72) Inventeur: LUIZY, Romain, 18700 Aubigny sur Nere (FR); BOUET, Jérôme, 18100 Vierzon (FR)
(74) Mandataire: Hirsch & Partners

(57) **Abrégé**

L'invention concerne un boîtier de commande (40) pour un moteur d'entraînement (42) d'une pompe de circulation de fluide, comprenant :
- une surface frontale de contact (45) avec un carter d'un moteur d'entraînement, une cavité de connexion (47) étant formée au niveau de la surface frontale de contact (45) ;
- au moins deux organes de connexion électrique (46) au moteur d'entraînement, les organes de connexion électrique étant formés à l'intérieur de la cavité de connexion ;
dans lequel la surface frontale de contact est configurée pour limiter la libre circulation de l'air à l'intérieur de la cavité de connexion (47) lorsque la surface frontale de contact (45) est disposée au contact du carter du moteur d'entraînement.

L'invention concerne également un carter de moteur d'entraînement à connecter au boîtier de commande (40) ainsi qu'une pompe de circulation comprenant un tel boîtier de commande et un tel carter.

## Description

La présente invention concerne un boîtier de commande et un carter de moteur d'entraînement pour pompe de circulation ainsi qu'une pompe de circulation comprenant de tels boîtier de commande et carter de moteur d'entraînement.

Lorsqu'une pompe de circulation est installée dans un circuit d'eau froide, par exemple dans un circuit de climatisation ou une pompe à chaleur, la température de pièces véhiculant l'eau froide ou de pièces adjacentes peut localement être bien inférieure à la température de l'air environnant la pompe de circulation. Selon la température de l'air ambiant, ou environnant la pompe de circulation, le degré d'humidité de cet air ambiant et la température de certaines pièces, un phénomène de condensation peut intervenir de sorte que des gouttelettes se forment sur certaines parois de la pompe de circulation. En particulier, la condensation de l'eau présente dans l'air ambiant intervient lorsque la température d'une paroi est strictement inférieure à la température de rosé, ou point de rosé. La température de rosé dépend de la température ambiante et du taux d'humidité de l'air. Cette température de rosée peut notamment être déterminée grâce à des diagrammes psychrométriques.

Lors de l'utilisation d'installations de chauffage dans lesquelles une pompe de circulation est installée, il a été observé que des gouttelettes d'eau se condensait sur la pompe de circulation au niveau des parties métalliques, notamment au niveau du carter du moteur d'entraînement de la pompe de circulation, et des pièces très proches ou en contact avec ces parties métalliques, notamment le boîtier de commande du moteur d'entraînement.

La présence de ces gouttelettes d'eau est particulièrement problématique lorsque ces gouttelettes apparaissent à proximité de connexion électriques ou sont capables de ruisseler vers ces connexions électriques. En effet, le contact de l'eau avec les connexions électriques, ou toute pièce ayant un potentiel électrique, peut endommager la pompe de circulation. Les connexions électriques à risque sont notamment la connexion entre le boîtier de commande et le moteur d'entraînement.

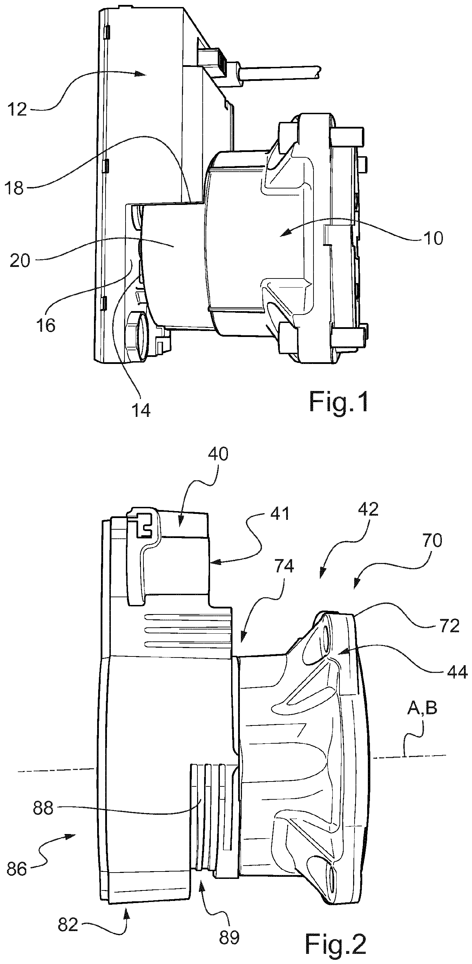

Pour éviter la condensation de l'eau à proximité des connexions électriques entre le moteur d'entraînement et le boîtier de commande, il est connu de disposer la façade du boîtier de connexion comportant les connexions électriques la plus éloignée possible de la paroi d'extrémité du carter du moteur d'entraînement faisant face à cette façade de connexion. Un telle pompe de circulation est représentée en figure 1.

Le carter 10 est disposé en position de connexion avec le boîtier de commande 12 dans laquelle une paroi d'extrémité 14 du carter fait face à une paroi de connexion 16 du boîtier de commande 12. Le carter 10 forme un cylindre circulaire fermé à une extrémité par la paroi d'extrémité 14. La paroi de connexion 16 comprend plusieurs organes de connexion permettant de réaliser l'interconnexion entre une carte de commande disposée à l'intérieur du boîtier de commande 12 et des broches de connexion formées sur la paroi d'extrémité 14 du carter. La connexion de la carte de commande avec les broches de connexion permet l'alimentation en énergie électrique du moteur d'entraînement et l'échange d'informations entre le moteur d'entraînement et des organes de commande extérieurs.

Le boîtier de commande comprend une portion de guidage 18 circulaire coopérant avec une surface latérale 20 circulaire du carter 10 pour réaliser le guidage et la mise en position du carter 10 par rapport au boîtier de commande 12. Le boîtier de commande 12 et le carter 10 sont configurés de sorte qu'un espace est formé entre la paroi de connexion 14 et la paroi d'extrémité 16 lorsque le boîtier de commande 12 et le carter 10 sont en position de connexion. Cet espace, appelé lame d'air, permet de limiter les contacts entre le boîtier de commande 12 et le carter 10 de manière à limiter les échanges thermiques.

Toutefois, il s'avère qu'à l'usage de la condensation se forme néanmoins avec ce type de pompe de circulation. En conséquence, le type de pompe de circulation représenté en figure 1 ne permet de limiter la condensation de manière satisfaisante pour écarter tout risque d'endommagement de la pompe de circulation.

Le but de la présente invention est de fournir un boîtier de commande et un carter de moteur d'entraînement permettant de remédier au moins partiellement aux inconvénients précités.

Plus particulièrement, l'invention vise à fournir un boîtier de commande et un carter de moteur d'entraînement permettant de réduire la condensation d'eau à proximité des connexions électriques entre le carter et le boîtier de commande.

A cette fin, la présente invention propose un boîtier de commande pour un moteur d'entraînement d'une pompe de circulation de fluide, comprenant :
- une surface frontale de contact avec un carter d'un moteur d'entraînement, une cavité de connexion étant formée au niveau de la surface frontale de contact ;
- au moins deux organes de connexion électrique au moteur d'entraînement, les organes de connexion électrique étant formés à l'intérieur de la cavité de connexion ;
dans lequel la surface frontale de contact est configurée pour limiter la libre circulation de l'air à l'intérieur de la cavité de connexion lorsque la surface frontale de contact est disposée au contact du carter du moteur d'entraînement.

Selon un mode de réalisation du boîtier de commande, la surface frontale de contact est configurée pour empêcher le passage de l'air entre la surface frontale de contact et le carter du moteur d'entraînement lorsque la surface frontale de contact est disposée au contact du carter du moteur d'entraînement.

Selon un autre mode de réalisation, la surface frontale de contact s'étend autour de la cavité de connexion.

Selon un autre mode de réalisation, la cavité de connexion et la surface frontale de contact s'étendent autour d'un axe de connexion, la cavité de connexion comprenant une surface de connexion à partir de laquelle les organes de connexion électrique font saillie dans la cavité de connexion, la surface de connexion et la surface frontale de contact définissant un plan de connexion et un plan de contact frontal, respectivement, les plans de connexion et de contact étant transversaux à l'axe de connexion et séparés l'un de l'autre le long de l'axe de connexion.

Selon un autre mode de réalisation, le boîtier de commande comprend également une surface latérale de contact formée sur une paroi de la cavité de connexion, la surface latérale de contact étant configurée pour être mise au contact d'au moins une patte de fixation formée sur le carter du moteur d'entraînement.

Selon un autre mode de réalisation, la surface latérale de contact comprend une première et une deuxième portions de surfaces de contact latéral formées de part et d'autre de l'axe de connexion, la cavité de connexion comprenant au moins un trou de passage apte à coopérer avec un organe de fixation du carter avec le boîtier de commande, les première et deuxième portions de surfaces de contact latéral étant formées de manière à être en contact avec des première et deuxième portions de pattes d'un carter lorsque la surface frontale de contact est au contact du carter.

Selon un autre mode de réalisation, le boîtier de commande comprend en outre une coque formant une cavité intérieure configurée pour recevoir une carte de commande à connecter aux organes de connexion, la coque formant une façade de connexion comprenant la surface frontale de contact, la cavité intérieure étant séparée de la cavité de connexion par la façade de connexion, dans lequel les première et deuxième portions de surfaces de contact latéral sont formées sur la façade de connexion hors de la cavité intérieure.

Selon un autre mode de réalisation, le boîtier de commande comprend au moins un creux formé dans la surface frontale de contact et configuré pour stocker un liquide.

Selon un autre mode de réalisation, le boîtier de commande comprend un premier organe de connexion électrique configuré pour être connecté à une broche d'un stator du moteur d'entraînement et un deuxième organe de connexion électrique configuré pour être connecté à un organe de mesure du moteur d'entraînement.

L'invention propose également un carter de moteur d'entraînement configuré pour recevoir un stator d'une pompe de circulation de fluide, comprenant une surface de jonction apte à être disposée au contact d'une surface frontale de contact d'un boîtier de commande tel que décrit ci-dessus pour limiter la libre circulation de l'air à l'intérieur de la cavité de connexion du boîtier de commande.

Selon un mode de réalisation du carter, celui-ci forme un corps creux s'étendant le long et autour d'un axe de carter, le corps creux comportant au niveau d'une première extrémité une bride de fixation à un corps de pompe, la surface de jonction étant formée au niveau d'une deuxième extrémité du corps creux opposée à la première extrémité le long de l'axe de carter, la deuxième extrémité étant ouverte.

Selon un autre mode de réalisation, le carter comprend au moins une patte de fixation du carter au boîtier de commande, la patte de fixation faisant saillie hors de la surface de jonction de manière à coopérer avec une surface latérale de contact d'un boîtier de commande lorsque la surface de jonction est disposée au contact d'une surface frontale de contact du boîtier de commande.

Selon un autre mode de réalisation, la patte de fixation comporte une première portion de patte s'étendant tangentiellement par rapport à l'axe de carter et une deuxième portion de patte s'étendant radialement par rapport à l'axe de carter.

Selon un autre mode de réalisation, un trou de fixation apte à coopérer avec un organe de fixation du carter avec le boîtier de commande est formé dans la deuxième portion de patte.

L'invention concerne en outre une pompe de circulation commandée d'un fluide comprenant :
- un corps de pompe et une turbine logée à l'intérieur du corps de pompe ;
- un moteur d'entraînement comprenant un rotor solidaire de la turbine de manière à faire circuler un fluide à l'intérieur de corps de pompe par la mise en rotation de la turbine, un stator configuré pour déplacer en rotation le rotor et un carter de moteur d'entraînement tel que décrit ci-dessus dans lequel sont logés le stator et le rotor, une première extrémité du carter étant fixé au corps de pompe ;
- un boîtier de commande tel que décrit ci-dessus fixé à une deuxième extrémité du carter de sorte que la surface frontale de contact et la surface de jonction sont en contact l'une avec l'autre pour limiter la libre circulation de l'air à l'intérieur de la cavité de connexion.

D'autres caractéristiques et avantages de l'invention apparaîtront à la lecture de la description qui suit d'un mode de réalisation préféré de l'invention, donnée à titre d'exemple et en référence au dessin annexé.
La figure 1 représente schématiquement un boîtier de commande et un moteur d'entraînement connus.
La figure 2 représente schématiquement un boîtier de commande et un moteur d'entraînement selon l'invention.
La figure 3 représente schématiquement un boîtier de commande configuré pour être connecté au moteur d'entraînement de la figure 2.
La figure 4 représente une vue de côté du boîtier de commande des figures 2 et 3 dans un capot a été ôté.
La figure 5 représente schématiquement un carter de moteur d'entraînement configuré pour être connecté au boîtier de commande des figures 2 et 3.

En référence à la figure 2, il est proposé un boîtier de commande 40 pour une pompe de circulation, par exemple une pompe de circulation installée dans un circuit d'eau froide, notamment un circuit de climatisation ou une pompe à chaleur. Le boîtier de commande 40 est connecté à un moteur d'entraînement 42 permettant la mise en rotation d'une turbine (non visible) pour la mise en mouvement d'un fluide présent dans le circuit. Le moteur d'entraînement 42 comprend un carter 44 sur lequel est assemblé le boîtier de commande 40 ainsi qu'un stator et un rotor configurés pour coopérer ensemble pour réaliser la mise en rotation de la turbine.

Le boîtier de commande 40 permet de transmettre au moteur d'entraînement 42 l'énergie électrique nécessaire à son fonctionnement tout en permettant de faire varier la vitesse de rotation du moteur d'entrainement 42. En effet, le boîtier de commande 40 permet la transmission d'énergie électrique et de signaux d'information au moteur d'entraînement 42 pour le commander.

Le boîtier de commande 40, le moteur d'entraînement 42 ainsi que la turbine logée à l'intérieur d'un corps de pompe forment une pompe de circulation commandée.

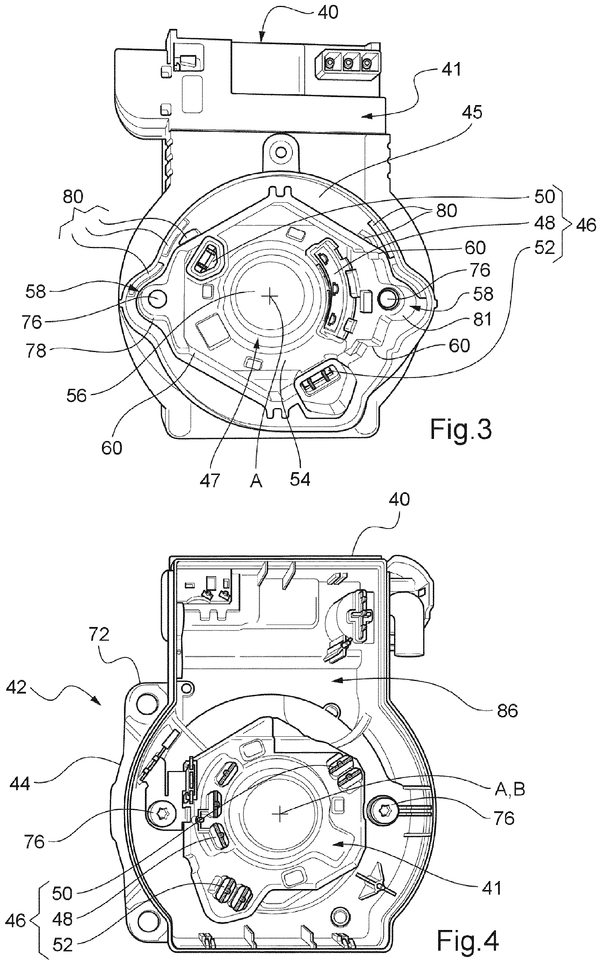

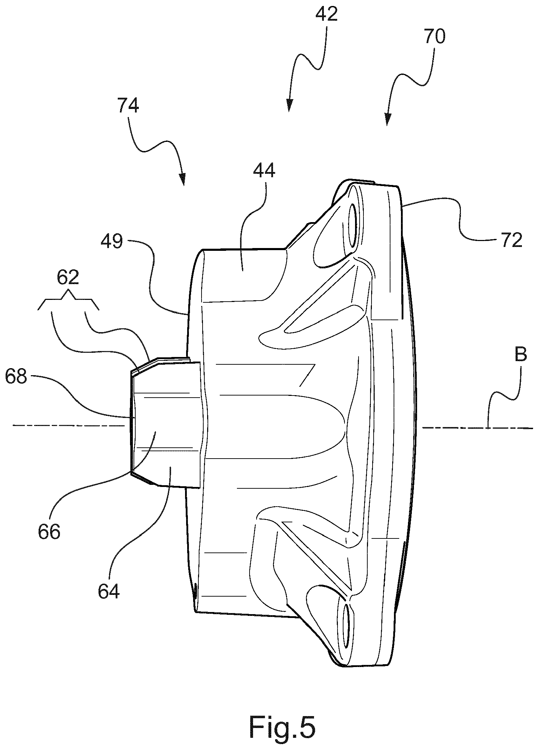

En référence à la figure 3, le boîtier de commande 40 comprend une surface frontale de contact 45 avec le moteur d'entraînement 42. La surface frontale de contact 45 est disposée au niveau d'une façade de connexion 41, ou demi-coque, du boîtier de commande 40. La surface frontale de contact 45 est configurée pour être disposée au contact du carter 44 du moteur d'entraînement, en particulier au contact d'une surface de jonction 49 du carter 44 (figure 5).

Une cavité de connexion 47 est formée au niveau de la surface frontale de contact 45. La cavité de connexion 47 et la surface frontale de connexion 45 s'étendent autour d'un axe de connexion A. Dans le mode de réalisation des figures 2 à 4, l'axe de connexion A est confondu avec l'axe de rotation du rotor du moteur d'entraînement 42. De manière alternative, l'axe de connexion A peut être décalé ou incliné par rapport à l'axe de rotation du rotor.

La surface frontale de contact 45 s'étend autour de la cavité de connexion 47 de manière à délimiter les contours de la cavité de connexion 47. La surface frontale de contact 45 est de forme sensiblement annulaire. La surface frontale de contact 45 s'étend de manière continue autour de la cavité de connexion 47 pour permettre une bonne mise en position de la surface frontale de contact 45 sur la surface de jonction 49. Une surface annulaire continue permet de réaliser une bonne mise en position tout en permettant de favoriser l'étanchéité de la cavité de connexion 47 par le biais du contact entre les surfaces frontale de contact 45 et de jonction 49. De manière alternative, la surface frontale de contact 45 peut être discontinue ou former uniquement un secteur angulaire autour de la cavité de connexion 47. De manière encore alternative, la surface frontale de contact 45 peut comporter plusieurs portions de surface. De manière générale, la surface frontale de contact 45 peut être de toute forme permettant la mise en position du boîtier de commande 40 par rapport au carter 44. Ainsi, la surface frontale de contact 45 s'étend de préférence au moins au niveau de trois zones disposées autour de l'axe de connexion équidistantes les unes par rapport aux autres pour assurer une bonne stabilité du contact entre la surface frontale de contact 45 et la surface de jonction 49.

Pour minimiser les risques de condensation, la surface frontale de contact 45 a une superficie réduite permettant de stabiliser le carter 44 par rapport au boîtier de commande 40 tout en minimisant les zones de contact entre le carter 44 et le boîtier de commande 40. Ainsi, la réduction des zones de contact entre le carter 44 et le boîtier de commande 40 permet de réduire les risques de condensation.

En référence à la figure 4 qui représente l'intérieur du boîtier de commande 40, ce dernier comprend en outre une coque formant une cavité intérieure 86 configurée pour recevoir une carte de commande (non visible) à connecter aux organes de connexion 46. La coque forme la façade de connexion 41 comprenant la surface frontale de contact 45, la cavité intérieure 86 étant séparée de la cavité de connexion 47 par la façade de connexion 41. Le boîtier de commande 40 comprend également un capot (non visible) à monter sur la coque pour fermer la cavité intérieure 86.

En référence à la figure 5, le carter 44 forme un corps creux s'étendant le long et autour d'un axe de carter B. L'axe de carter B est ici confondu avec l'axe de connexion A et l'axe de rotation du rotor. De manière alternative, l'axe de carter B peut être décalé ou incliné par rapport à l'un ou les deux parmi l'axe de connexion A et l'axe de rotation du rotor. Le corps creux comporte au niveau d'une première extrémité 70 une bride de fixation 72 au corps de pompe et au niveau d'une deuxième extrémité 74 la surface de jonction 49. La deuxième extrémité 74 est opposée à la première extrémité 70 le long de l'axe de carter B. La surface de jonction 49 est au moins partiellement en complémentarité de forme avec la surface frontale de contact 45, de préférence totalement en complémentarité de forme.

Pour réaliser la connexion entre une carte de commande (non visible) du boîtier de commande 40 et le moteur d'entraînement 42, le boîtier de commande 40 comprend également trois organes de connexion électrique 46 configurés pour être connectés au moteur d'entraînement 42. La carte de commande est logée à l'intérieur du boîtier de commande 40 et permet la transmission ainsi que le traitement des données associées à la commande du moteur d'entraînement 42. Les organes de connexion électrique 46 permettent l'interconnexion entre le moteur d'entraînement 42 et la carte de commande.

Les organes de connexion électrique 46 comportent un organe de connexion au stator 48 ainsi qu'un premier 50 et un deuxième 52 organes de connexion de mesure, ou connexions à coefficient de température positif (appelé connexion PTC pour « Positive Temperature Coefficient », en anglais). L'organe de connexion au stator 48 constitue un premier organe de connexion configuré pour être connecté à une broche du stator du moteur d'entraînement 42 et les premier 50 et deuxième 52 organes de connexion de mesure constituent un deuxième organe de connexion configuré pour être connecté à un organe de mesure du moteur d'entraînement 42, tel qu'un capteur. De manière alternative, le boîtier de commande 40 peut comporter davantage d'organes de connexion 46. De préférence, le boîtier de commande 40 comprend aux moins deux organes de connexion électrique 46. Dans ce cas, les organes de connexion électrique 46 sont de préférence un organe de connexion au stator 48 et l'un parmi les premier 50 et deuxième 52 organes de connexion de mesure.

L'isolation des organes de connexion électrique 46 est un enjeu important de la réduction des risques associés à la condensation dans le boîtier de commande. Pour réaliser cet isolement, les organes de connexion électrique 46 sont disposés dans la cavité de connexion 47. En particulier, les organes de connexion électrique 46 font saillie à partir d'une surface de connexion 54 formée dans la cavité de connexion 47. La surface de connexion 54 définit un plan de connexion et la surface frontale de connexion 45 définit un plan de contact frontal. Les plans de connexion et de contact frontal sont transversaux à l'axe de connexion A et séparés l'un de l'autre le long de l'axe de connexion A. En d'autres termes, la surface de connexion 54 et la surface frontale de contact 45 sont décalées le long de l'axe de connexion A. Ce décalage entre les plans de contact frontal et de connexion permet d'augmenter la distance entre le carter 44 et le boîtier de commande 40 de manière à réduire le transfert thermique entre le carter 44 et le boîtier de commande 40. Ainsi, le risque de condensation est réduit. Les plans de contact frontal et de connexion sont parallèles l'un par rapport à l'autre pour faciliter la connexion des organes de connexion électrique 46. De manière alternative, les plans de contact frontal et de connexion peuvent être inclinés l'un par rapport à l'autre. De plus, les surfaces de connexion 54 et de contact frontal 45 peuvent ne pas être planes et comporter des portions incurvées ou inclinées par rapport à l'axe de connexion A. De manière générale, les surfaces de connexion 54 et de contact frontal 45 peuvent être de toute forme ou orientation permettant de conserver une distance entre les surfaces de connexion 54 et de contact frontal 45 le long de l'axe de connexion A.

D'autre part, l'isolement des organes de connexion électrique 46 peut également être réalisé en disposant un joint d'étanchéité autour de chacun des organes de connexion électrique 46. De manière similaire, la cavité de connexion 47 peut comprendre des saillies ou des creux permettant de renforcer l'étanchéité des organes de connexion électrique 46. Ainsi, le positionnement des organes de connexion électrique 46 à l'intérieur de la cavité de connexion 47 et l'étanchéité de ces organes de connexion électrique 46 vis-à-vis de la cavité de connexion 47 permettent de diminuer la condensation aux environs des organes de connexion électrique 46 mais également de réduire la possibilité pour des gouttes générées par condensation d'accéder aux organes de connexion électriques 46.

Pour augmenter davantage la distance entre le boîtier de commande 40 et le carter 44, la cavité de connexion 47 comprend également un renfoncement 56 en retrait par rapport à la surface de connexion 54. En d'autres termes, la cavité de connexion 47 comprend une extrémité ouverte de cavité au niveau de laquelle est formée la surface frontale de contact 45 et une extrémité fermée de cavité, la surface de connexion 54 étant disposée entre les extrémités ouverte et fermée de cavité. La surface de connexion 54 est de forme annulaire de sorte que le renfoncement 56 permet également de former un espace central dans lequel une pièce du carter peut être logée sans interférer avec la connexion des organes de connexion électrique 46.

Les organes de connexion électrique 46 sont disposés de manière à être en regard de broches de connexion correspondantes lorsque le boîtier de commande 40 est connecté au moteur d'entraînement 42. Lorsque la surface frontale de contact 45 est disposée au contact de la surface de jonction 49, la cavité de connexion 47 est fermée par le carter 44 de sorte que les organes de connexion 46 sont disposés dans un espace dont l'accès, notamment à l'air ambiant, est limité. Ainsi, les organes de connexion électrique 46 sont isolés à l'intérieur de la cavité de connexion 47 de sorte que le risque de condensation est limité.

Pour permettre un meilleur isolement de la cavité de connexion 47 lors de la connexion des organes de connexion électrique 46, la surface frontale de contact 45 est configurée pour limiter la libre circulation de l'air à l'intérieur de la cavité de connexion 47 lorsque la surface frontale de contact 45 est disposée au contact du carter 44 du moteur d'entraînement 42. En d'autres termes, la surface frontale de contact 45 est configurée pour empêcher le passage de l'air entre la surface frontale de contact 45 et le carter 44 du moteur d'entraînement 42 lorsque la surface frontale de contact 45 est disposée au contact du carter 44 du moteur d'entraînement 42. La limitation du passage de l'air peut être totale ou partielle.

En limitant la libre circulation de l'air entre la cavité de connexion 47 et l'extérieur de cette cavité de connexion 47, on parvient ainsi à réaliser une étanchéité partielle ou totale entre la surface frontale de contact 45 et le carter 44. Pour renforcer cette étanchéité, un joint peut être disposé le long de la surface frontale de contact 45. Ainsi, si l'air ambiant au niveau de l'installation de chauffage a une hygrométrie à risque concernant la condensation, cet air humide ne parvient pas à entrer à l'intérieur de la cavité de connexion 47. En conséquence, la configuration de la surface frontale de contact 45 et la cavité de connexion 47 permet de limiter davantage les risques de condensation au niveau des organes de connexion électrique 46.

Pour réaliser la limitation de la libre circulation de l'air à l'intérieur de la cavité de connexion 47, le contact entre la surface frontale de contact 45 et la carter 44, en particulier la surface de jonction 49, peut être complet ou partiel. En d'autres termes, la zone de contact entre les surfaces de jonction 49 et frontale de contact 45 peut être continue ou discontinue. En effet, l'une ou les deux parmi les surfaces de jonction 49 et frontale de contact 45 peut comporter des excroissances, des creux ou plus généralement des obstacles permettant de limiter partiellement le passage de l'air entre les surfaces de jonction 49 et frontale de contact 45.

Pour permettre une bonne étanchéité de la cavité de connexion 47 tout en limitant l'encombrement du boîtier de commande 40 et du carter 44, la surface frontal de contact 45 est totalement ou partiellement en complémentarité de forme avec la surface de jonction 49.

Pour limiter la génération de condensation à l'intérieur de la cavité de connexion 47, le boîtier de commande 40 comporte en outre des nervures 88 formées sur une paroi latérale 89 du boîtier de commande 40. La paroi latérale 89 constitue une paroi de la cavité de connexion 47 et donne sur l'extérieur du boîtier de commande 40. Les nervures 88 permettent d'augmenter la superficie de la paroi latérale 89 en contact avec l'air ambiant extérieur de manière augmenter la dissipation de chaleur et ainsi réduire la condensation à l'intérieur de la cavité de connexion 47. Les nervures 88 font saillie hors de la paroi latérale 89 sur une portion angulaire faisant entre 90° et 270 °, de préférence entre 135° et 225°, de préférence d'environ 180° autour de l'axe de connexion A. Pour améliorer la dissipation de chaleur, et donc réduire la condensation, il est préférable que la portion angulaire soit la plus grande possible. Ainsi, de manière alternative aux valeurs mentionnées ci-dessus, les nervures 88 peuvent entourer totalement la cavité de connexion 47, c'est-à-dire s'étendre sur une portion angulaire de 360° autour de l'axe de connexion A. Les nervures 88 s'étendent suivant un plan perpendiculaire à l'axe de de connexion A, formant ainsi des nervures 88 circulaires. De manière alternative, les nervures 88 peuvent être de toute forme ou orientation permettant d'augmenter la superficie de la paroi latérale 89. A titre d'exemple, les nervures 88 peuvent s'étendre le long de l'axe de connexion A ou former des zig-zag ou des courbes.

De plus, pour contenir une éventuelle condensation formée sur le boîtier de commande 40 ou sur le carter 44, le boîtier de commande 40 comprend une pluralité de creux 80 pour stocker un liquide formée par condensation. Les creux 80 sont disposées à l'extérieur de la cavité de connexion 47 de manière à drainer la condensation vers l'extérieur de la cavité de connexion 47 pour limiter les risques de contact entre les organes de connexion électrique 46 et les gouttes formées par condensation. Les creux 80 sont formés dans la surface frontale de contact 45, notamment à proximité de la surface latérale de contact 58. Les creux 80 peuvent être étanches par rapport à la cavité de connexion 47. De manière alternative, les creux 80 peuvent communiquer avec cette cavité de connexion 47 de manière à améliorer le drainage des gouttes formées par condensation depuis la cavité de connexion 47 vers l'extérieur de celle-ci. Les creux 80 consistent en des rainures s'étendant suivant le contour de la surface frontale de contact 45. De manière alternative, les creux 80 peuvent avoir toute forme et toute orientation permettant de stocker quelques gouttes d'un liquide. De plus, ces creux 80 forment des obstacles thermiques pour la diffusion de la chaleur, notamment des basses températures des parois du carter 44.

Pour permettre la mise en position du carter 44 par rapport boîtier de commande 40, le boîtier de commande 40 comprend également une surface latérale de contact 58 formée sur une paroi de la cavité de connexion 47. La surface latérale de contact 58 est configurée pour être mise au contact de deux pattes de fixation 62 formées sur le carter 44 du moteur d'entraînement 42 (figure 5). Les pattes de fixation 62 font saillie hors de la surface de jonction 49 de manière à coopérer avec la surface latérale de contact 58 du boîtier de commande 40 lorsque la surface de jonction 49 est disposée au contact de la surface frontale de contact 45 du boîtier de commande 40. Les pattes de fixation 62 sont configurées pour coopérer avec la surface latérale de contact 58 au niveau d'une première 78 et d'une deuxième 81 portions de surfaces de contact latéral formées de part et d'autre de l'axe de connexion A.

La surface latérale de contact 58 s'étend transversalement à la surface frontale de contact 45 et donc au plan de contact frontal. Ainsi, la surface frontale de contact 45 permet de réaliser un positionnement le long de l'axe de connexion A et la surface latérale de contact 58 permet de réaliser un positionnement suivant des axes transversaux à l'axe de connexion A. De plus, la surface latérale de contact 58 forme des butées 60 configurées pour coopérer avec les pattes de fixation 62 de manière à réaliser un positionnement angulaire du carter 44 par rapport au boîtier de commande 40. Ainsi la surface latérale de contact permet d'indexer le carter 44 pour que les organes de connexion électrique 46 soient disposés en regard des broches de connexion correspondantes du moteur d'entraînement 42. De manière alternative, le carter 44 peut comporter plus de deux pattes de fixation 62 équi-réparties autour de l'axe de connexion A. De manière encore alternative, le carter 44 peut comprendre une seule patte de fixation 62 pour réaliser la mise en position du carter 44 par rapport au boîtier de commande 40. Quel que soit le nombre de patte de fixation 62, le contour de la cavité de connexion 47 est formé de manière complémentaire au carter 44 de manière à coopérer avec l'ensemble des pattes de fixation 62.

Pour maintenir une distance entre le carter 44 et le boîtier de commande 40 permettant de limiter la condensation, la surface latérale de contact 58 est formée de sorte que seules les pattes de fixation 62 font saillie à l'intérieur de la cavité de connexion 47. En d'autres termes, les pattes de fixation 62 sont les seules portions du carter 44 qui sont disposées à l'intérieur de la cavité de connexion 47 lorsque la surface frontale de contact 45 est disposée au contact de la surface de jonction 49. Ainsi, la mise en position du carter 44 par rapport au boîtier de commande 40 est réalisée tout en réduisant la distance entre le carter 44 et le boîtier de commande 40 le long de l'axe de connexion A. La profondeur des pattes de fixation 62 le long de l'axe de connexion A est également prévue pour être réduite de manière à limiter davantage les risques de condensation. Une première portion de patte 64 formée sur chacune des pattes de fixation 62 s'étend tangentiellement par rapport à l'axe de connexion A sur un secteur angulaire réduit de manière à minimiser les zones de contact entre le carter 44 et le boîtier de commande 40. Ainsi, la réduction des zones de contact entre le carter 44 et le boîtier de commande 40 permet de réduire les risques de condensation. De manière alternative, les pattes de fixation 62 peuvent s'étendre perpendiculairement à l'axe de connexion ou dans toute autre direction permettant de réaliser la mise en position du carter 44 par rapport au boîtier de commande 40.

Pour réaliser le maintien en position du carter 44, chacune des pattes de fixation 62 comportent une deuxième portion de patte 66 s'étendant radialement par rapport à l'axe de carter B. La deuxième portion de patte 66 comprend un trou de fixation 68 apte à coopérer avec un organe de fixation du carter 44 avec le boîtier de commande 40. A titre d'exemple, le trou de fixation 68 peut être un trou taraudé apte à coopérer avec une vis de fixation. Pour réaliser un assemblage complet du carter 44 et du boîtier de commande 40, la cavité de connexion 47 comprend un trou de passage 76 disposé en regard de chacun des trous de fixation 68 et apte à coopérer avec l'organe de fixation du carter 44 avec le boîtier de commande 40. De plus, le fait que la deuxième portion de patte 66 s'étende radialement par rapport à l'axe de carter B permet d'améliorer la mise en position angulaire du carter 44 autour de l'axe de connexion A.

De plus, les première 78 et deuxième 81 portions de surfaces de contact latéral sont formées de manière à être en contact avec les première 64 et deuxième 66 portions de pattes du carter 44 lorsque la surface frontale de contact 45 est au contact du carter 44. En particulier, les première 78 et deuxième 81 portions de surfaces de contact latéral sont formées sur la façade de connexion 41, hors de la cavité intérieure 86. Dès lors, les première 64 et deuxième 66 portions de pattes sont disposées à l'extérieur de la cavité intérieure 86 lorsque le carter 44 et le boîtier de commande 40 sont montés ensemble, limitant ainsi davantage la condensation générée par le contact entre les pattes de fixation 62 et les première 78 et deuxième 81 portions de surfaces de contact latéral.

En outre, le carter 44 est ouvert au niveau de la deuxième extrémité 74 de manière à réduire l'impact des surfaces froides du carter 44 sur le boîtier de commande 40. On entend par « surface froide », une surface dont la température est susceptible d'entrainer de la condensation. Ainsi, on limite les risques de condensation par rapport à une pompe dans laquelle le carter 44 comporte une paroi d'extrémité fermant le corps creux au niveau de la deuxième extrémité 74, telle que la pompe de circulation représenté en figure 1.

Il est également proposé une pompe de circulation commandée d'un fluide comprenant un corps de pompe et une turbine logée à l'intérieur du corps de pompe. La pompe de circulation comprend également un moteur d'entraînement 42 comprenant un rotor solidaire de la turbine de manière à faire circuler un fluide à l'intérieur de corps de pompe par la mise en rotation de la turbine. Le moteur d'entraînement 42 comprend en outre un stator configuré pour déplacer en rotation le rotor et un carter 44 de moteur d'entraînement tel que présenté ci-avant dans lequel sont logés le stator et le rotor. Une première extrémité 70 du carter 44 est fixée au corps de pompe. La pompe de circulation comprend en outre un boîtier de commande 40 tel que présenté ci-avant fixé à une deuxième extrémité 74 du carter 44 de sorte que la surface frontale de contact 45 et la surface de jonction 49 sont en contact l'une avec l'autre pour limiter la libre circulation de l'air à l'intérieur de la cavité de connexion 47.

Bien entendu, la présente invention n'est pas limitée aux exemples et au mode de réalisation décrits et représentés, mais elle est susceptible de nombreuses variantes accessibles à l'homme de l'art.

## Revendications

1. Boîtier de commande (40) pour un moteur d'entraînement (42) d'une pompe de circulation de fluide, comprenant :
- une surface frontale de contact (45) avec un carter (44) d'un moteur d'entraînement (42), une cavité de connexion (47) étant formée au niveau de la surface frontale de contact (45) ;
- au moins deux organes de connexion électrique (46) au moteur d'entraînement (42), les organes de connexion électrique (46) étant formés à l'intérieur de la cavité de connexion (47) ;
dans lequel la surface frontale de contact (45) est configurée pour limiter la libre circulation de l'air à l'intérieur de la cavité de connexion (47) lorsque la surface frontale de contact (45) est disposée au contact du carter (44) du moteur d'entraînement (42).

2. Boîtier de commande (40) selon la revendication 1, dans lequel la surface frontale de contact (45) est configurée pour empêcher le passage de l'air entre la surface frontale de contact (45) et le carter (44) du moteur d'entraînement (42) lorsque la surface frontale de contact (45) est disposée au contact du carter (44) du moteur d'entraînement (42).

3. Boîtier de commande (40) selon la revendication 1 ou 2, dans lequel la surface frontale de contact (45) s'étend autour de la cavité de connexion (47).

4. Boîtier de commande (40) selon la revendication 3, dans lequel la cavité de connexion (47) et la surface frontale de contact (45) s'étendent autour d'un axe de connexion (A), la cavité de connexion (47) comprenant une surface de connexion (54) à partir de laquelle les organes de connexion électrique (46) font saillie dans la cavité de connexion (47), la surface de connexion (54) et la surface frontale de contact (45) définissant un plan de connexion et un plan de contact frontal, respectivement, les plans de connexion et de contact étant transversaux à l'axe de connexion (A) et séparés l'un de l'autre le long de l'axe de connexion (A).

5. Boîtier de commande (40) selon l'une quelconque des revendications précédentes, comprenant également une surface latérale de contact (58) formée sur une paroi de la cavité de connexion (47), la surface latérale de contact (58) étant configurée pour être mise au contact d'au moins une patte de fixation (62) formée sur le carter (44) du moteur d'entraînement (42).

6. Boîtier de commande (40) selon la revendication 5, dans lequel la surface latérale de contact (58) comprend une première (78) et une deuxième (81) portions de surfaces de contact latéral formées de part et d'autre de l'axe de connexion (A), la cavité de connexion (47) comprenant au moins un trou de passage (76) apte à coopérer avec un organe de fixation du carter (44) avec le boîtier de commande (40), les première (78) et deuxième (81) portions de surfaces de contact latéral étant formées de manière à être en contact avec des première (64) et deuxième (66) portions de pattes du carter (44) lorsque la surface frontale de contact (45) est au contact du carter (44).

7. Boîtier de commande (40) selon la revendication 6, comprenant en outre une coque formant une cavité intérieure (86) configurée pour recevoir une carte de commande à connecter aux organes de connexion (46), la coque formant une façade de connexion (41) comprenant la surface frontale de contact (45), la cavité intérieure (86) étant séparée de la cavité de connexion (47) par la façade de connexion (41), dans lequel les première (78) et deuxième (81) portions de surfaces de contact latéral sont formées sur la façade de connexion (41) hors de la cavité intérieure (86).

8. Boîtier de commande (40) selon l'une quelconque des revendications précédentes, comprenant au moins un creux (80) formé dans la surface frontale de contact (45) et configuré pour stocker un liquide.

9. Boîtier de commande (40) selon l'une quelconque des revendications précédentes, comprenant un premier organe de connexion électrique (48) configuré pour être connecté à une broche d'un stator du moteur d'entraînement (42) et un deuxième organe de connexion électrique (50, 52) configuré pour être connecté à un organe de mesure du moteur d'entraînement (42).

10. Carter (44) de moteur d'entraînement (42) configuré pour recevoir un stator d'une pompe de circulation de fluide, comprenant une surface de jonction (49) apte à être disposée au contact d'une surface frontale de contact (45) d'un boîtier de commande (40) selon l'une quelconque des revendications 1 à 8 pour limiter la libre circulation de l'air à l'intérieur de la cavité de connexion (47) du boîtier de commande (40).

11. Carter (44) selon la revendication 10, formant un corps creux s'étendant le long et autour d'un axe de carter (B), le corps creux comportant au niveau d'une première extrémité (70) une bride de fixation (72) à un corps de pompe, la surface de jonction (49) étant formée au niveau d'une deuxième extrémité (74) du corps creux opposée à la première extrémité (70) le long de l'axe de carter (B), la deuxième extrémité étant ouverte.

12. Carter (44) selon la revendication 10 ou 11, comprenant au moins une patte de fixation (62) du carter (44) au boîtier de commande (40), la patte de fixation (62) faisant saillie hors de la surface de jonction (49) de manière à coopérer avec une surface latérale de contact (58) d'un boîtier de commande (40) lorsque la surface de jonction (49) est disposée au contact d'une surface frontale de contact (45) du boîtier de commande (40).

13. Carter (44) selon la revendication 12, dans lequel la patte de fixation (62) comporte une première portion de patte (64) s'étendant tangentiellement par rapport à l'axe de carter (B) et une deuxième portion de patte (66) s'étendant radialement par rapport à l'axe de carter (B).

14. Carter (44) selon la revendication 13, dans lequel un trou de fixation (68) apte à coopérer avec un organe de fixation du carter (44) avec le boîtier de commande (40) est formé dans la deuxième portion de patte (66).

15. Pompe de circulation commandée d'un fluide comprenant :
- un corps de pompe et une turbine logée à l'intérieur du corps de pompe ;
- un moteur d'entraînement (42) comprenant un rotor solidaire de la turbine de manière à faire circuler un fluide à l'intérieur de corps de pompe par la mise en rotation de la turbine, un stator configuré pour déplacer en rotation le rotor et un carter (44) de moteur d'entraînement (42) selon l'une quelconque des revendications 10 à 14 dans lequel sont logés le stator et le rotor, une première extrémité (70) du carter (44) étant fixé au corps de pompe ;
- un boîtier de commande (40) selon l'une quelconque des revendications 1 à 9 fixé à une deuxième extrémité (74) du carter (44) de sorte que la surface frontale de contact (45) et la surface de jonction (49) sont en contact l'une avec l'autre pour limiter la libre circulation de l'air à l'intérieur de la cavité de connexion (47).
